# EUROPÄISCHE PATENTSCHRIFT

(11) **EP 1 116 098 B1**
(45) Veröffentlichungstag und Bekanntmachung des Hinweises auf die Patenterteilung: **07.05.2003**
(21) Anmeldenummer: 00962165.7
(22) Anmeldetag: 28.07.2000
(51) Int. Cl.: G06F 5/06

(54) **VERFAHREN UND VORRICHTUNG ZUM SCHREIBEN UND LESEN EINES PUFFERSPEICHERS**
METHOD AND DEVICE FOR WRITING AND READING A BUFFER MEMORY
PROCEDE ET DISPOSITIF D'ECRITURE ET DE LECTURE D'UNE MEMOIRE TAMPON

(30) Priorität: 28.07.1999 DE 19935499
(43) Veröffentlichungstag der Anmeldung: 18.07.2001
(73) Patentinhaber: Infineon Technologies AG, 81669 München (DE)
(72) Erfinder: HOBER, Peter, D-85521 Riemerling (DE)
(74) Vertreter: Reinhard - Skuhra - Weise & Partner
(86) Internationale Anmeldenummer: DE0002501
(87) Internationale Veröffentlichungsnummer: WO01009710

(56) Entgegenhaltungen:
- EP-A- 0 299 264
- GB-A- 2 291 230

## Beschreibung

Die Erfindung betrifft ein Verfahren und eine Vorrichtung zum Schreiben und Lesen eines Pufferspeichers gemäß dem Oberbegriff der Patentansprüche 1 und 4.

Bei Framer/Deframer-Applikationen mit Mikrokontrollersteuerung werden als Pufferspeicher FIFO-Speicher (First-In-First-Out-Speicher) eingesetzt. FIFO-Speicher sind in Tietze/Schenk "Halbleiterschaltungstechnik", 9.Auflage, 1990, in Kapitel 11.2.3 beschrieben.

Für das Entpacken (Deframing) und Zusammenstellen (Framing) von Daten einer ISDN-Rahmenstruktur (Integrated Services Digital Network), die im 2B1Q-Leitungskode empfangen werden, bieten sich 2-Bit organisierter FIFO-Speicher an. Nachteilig ist dabei allerdings, daß die meisten Mikrokontroller mit einer Wortbreite von 8 Bit arbeiten und daher zur Verarbeitung von Daten mit einer Wortbreite von 2-Bit aufwendige Schiebeoperationen notwendig sind. Dadurch vergrößert sich zudem der Programmkode eines Programms zur Verarbeitung der empfangenen ISDN-Rahmen.

Es ist daher Aufgabe der vorliegenden Erfindung, ein Verfahren und eine Vorrichtung zum Schreiben und Lesen eines Pufferspeichers anzugeben, die für die Verarbeitung von Daten verschiedenster Wortbreiten geeignet sind.

Die Veröffentlichung GB-A-2291230 entspricht einer Vorrichtung gemäß dem Präambel der Patentansprüche 1 und 4.

Diese Aufgabe wird erfindungsgemäß durch ein Verfahren mit den Merkmalen von Patentanspruch 1 und eine Vorrichtung mit den Merkmalen von Patentanspruch 4 gelöst. Vorteilhafte Ausgestaltungen des erfindungsgemäßen Verfahrens und der erfindungsgemäßen Vorrichtung sind den jeweiligen abhängigen Patentansprüchen entnehmbar.

Die Erfindung betrifft ein Verfahren zum Schreiben und Lesen eines Pufferspeichers, wobei der Pufferspeicher einen Eingang für Schreibdaten und einen Ausgang für Lesedaten aufweist, der Ausgang einer ersten Adressiereinrichtung als Schreibzeiger eine zu beschreibende Speicherzelle des Pufferspeichers adressiert und der Ausgang einer zweiten Adressiereinrichtung als Lesezeiger eine zu lesende Speicherzelle des Pufferspeichers adressiert, und mittels einer Vielzahl von Eingangssignalen die erste Adressiereinrichtung und die zweite Adressiereinrichtung derart gesteuert werden, daß die Wortbeite der Schreibdaten und die Wortbreite der Lesedaten unabhängig voneinander eingestellt werden.

Vorteilhafterweise ist somit einstellbar, welche Wortbreiten die Schreibdaten und die Lesedaten aufweisen. Gerade bei Framer/Deframer-Applikationen ist dieses Verfahren geeignet, um einen Mikrokontroller von Schiebeoperationen zu entlasten und die Größe eines Programms zum Entpacken/Packen von Daten (Framer/Deframer) zu verringern.

Vorzugsweise werden der Schreibzeiger und der Lesezeiger einer ersten Einrichtung zugeführt, die die Differenz zwischen dem Schreibzeiger und dem Lesezeiger berechnet und signalisiert. Dadurch erhält man jederzeit Informationen über den "Füllstand" des Pufferspeichers.

In einer bevorzugten Ausführungsform des Verfahrens ist eine zweite Einrichtung vorgesehen, die bei einer entsprechenden Signalisierung eine Adresse des Pufferspeichers speichert und die ein Signal ausgibt, wenn der Lesezeiger gleich der abgespeicherten Adresse ist. Vorteilhafterweise kann dadurch bei Framer/Deframer-Applikationen der Anfang eines Rahmens von Daten durch Abspeichern der Adresse, an der der Rahmenanfang im Pufferspeicher abgelegt ist, markiert werden. Zeigt der Lesezeiger auf den Rahmenanfang, kann das entsprechende Signal beispielsweise von einem Mikrokontroller ausgewertet werden.

Die Erfindung betrifft ferner eine Vorrichtung zum Schreiben und Lesen eines Pufferspeichers mit einer ersten Adressiereinrichtung und einer zweiten Adressiereinrichtung, wobei die erste Adressiereinrichtung eine zu beschreibende Speicherzelle des Pufferspeichers adressiert, die zweite Adressiereinrichtung eine zu lesende Speicherzelle des Pufferspeichers adressiert, und die erste und zweite Adressiereinrichtungen jeweils Steuereingänge zum Einstellen der Wortbreite von zu schreibenden bzw. zu lesenden Daten aufweisen.

Vorzugsweise sind erste und zweite Adressiereinrichtungen als Zähler ausgeführt, deren Zählschrittweite durch die Steuereingänge eingestellt wird. Ferner ist eine erste Einrichtung vorgesehen, der der Schreibzeiger und der Lesezeiger zugeführt werden und die einen Steuereingang zum Signalisieren eines Rahmenanfangs einer Rahmenstruktur von Daten und einen Ausgang zum Signalisieren der Differenz von Schreibzeiger und Lesezeiger aufweist.

In einer weiteren besonders bevorzugten Ausgestaltung der Vorrichtung ist eine zweite Einrichtung vorgesehen, der der Schreibzeiger zugeführt wird und die einen Steuereingang zum Abspeichern des Schreibzeigers und einen Ausgang zum Anzeigen eines Gleichstandes von Lesezeiger und abgespeicherten Schreibzeiger aufweist.

Vorzugsweise wird das Verfahren in einem Empfänger von ISDN-Daten angewendet, wobei in dem Empfänger die ISDN-Daten in ein IOM/PCM-Rahmenformat umgesetzt werden.

Weitere Vorteile und Anwendungsmöglichkeiten der Erfindung ergeben sich aus der nachfolgenden Beschreibung von Ausführungsbeispielen in Verbindung mit der Zeichnung. In der Zeichnung zeigt
Figur 1 ein Blockschaltbild einer Ausführungsform des erfindungsgemäßen Pufferspeichers, und
Figur 2 die Rahmenstruktur des IOM/PCM-Rahmen und die zur Erzeugung dieser Rahmenstruktur notwendigen Programmbefehle eines Mikrokontrollers.

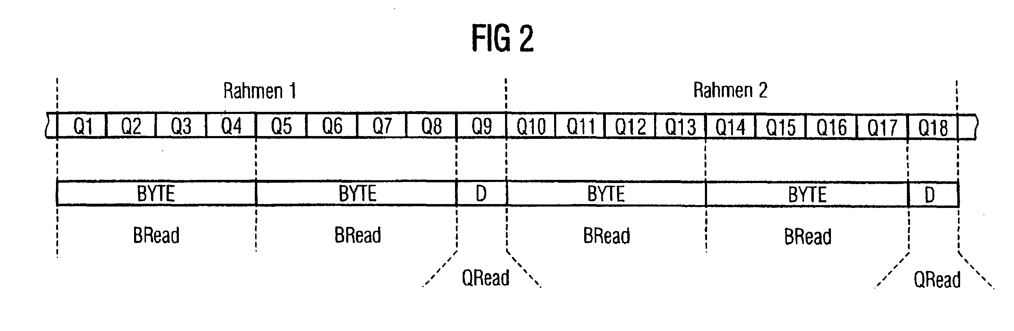

In Figur 2 sind zwei IOM/PCM-Rahmen 1 und 2 dargestellt. Jeder IOM/PCM-Rahmen weist dabei neun Symbole Q1 bis Q9 bzw. Q10 bis Q19 auf.

Die Symbole entsprechen empfangenen 2B1Q-ISDN-Daten. 2B1Q bedeutet dabei, daß 2 Bit durch ein quaternäres Symbol kodiert sind. Diese Kodierung wird allgemein bei ISDN für die Übertragung eingesetzt.

Die ISDN-Daten werden seriell empfangen und müssen für eine Weiterverarbeitung in das IOM/PCM-Rahmenformat umformatiert werden. Dazu werden die empfangenen ISDN-Daten in einen Pufferspeicher zwischengespeichert und von einem Mikrokontroller oder Prozessor, der die Daten umformatiert, entsprechend der zu erzeugenden Rahmenstruktur ausgelesen.

Insgesamt weist ein IOM/PCM-Rahmen 18 Bit auf. Ein herkömmlicher 8-Bit-Mikrokontroller benötigt damit zum Auslesen des Pufferspeichers drei Lesebefehle zum Lesen von drei Bytes und muß zum Erzeugen des IOM/PCM-Rahmen 1 bei dem letzten Byte der drei, mit den Lesebefehlen aus dem Pufferspeicher gelesenen Bytes durch eine Schiebeoperation die zwei Bits bzw. das Symbol Q9 des IOM/PCM-Rahmens 1 extrahieren. Dies erfolgt dann üblicherweise mittels aufwendiger Schiebeoperationen.

Mit dem erfindungsgemäßen Verfahren, das ein byte-weises (BRead: Byte-Read) und ein symbol-weises Lesen (QREad: Quaternär-Read, d.h. zwei Bit entsprechend einem quaternären Symbol lesen) der in dem Pufferspeicher abgelegten Daten ermöglicht, kann der 8-Bit-Mikrokontroller die zwei letzten Bit bzw. das letzte Symbol Q9 des IOM/PCM-Rahmen aus dem Pufferspeicher direkt lesen und benötigt dadurch keine Schiebeoperationen.

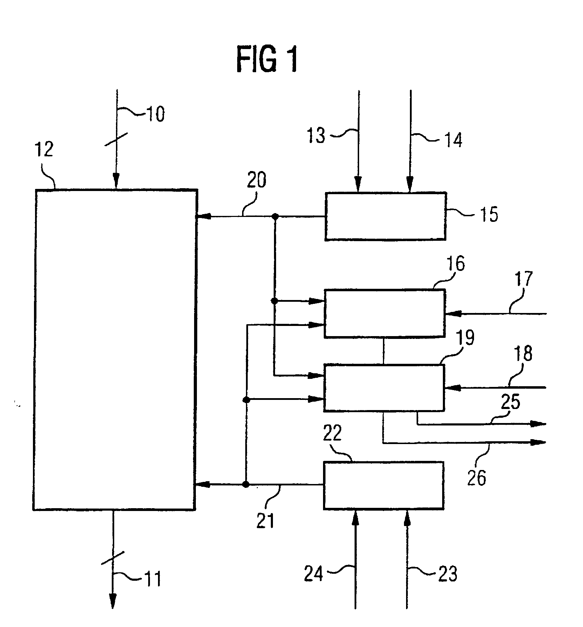

Das in Figur 1 dargestellte Blockschaltbild zeigt einen FIFO-Speicher 12, in den Eingangsdaten 10 mit einer ersten Wortbreite geschrieben und Ausgangsdaten 11 mit einer zweiten Wortbreite gelesen werden.

Ein erster Zähler 15, der als erste Adressiereinrichtung des FIFO-Speichers eingesetzt wird, erzeugt durch seinen Zählerstand als Ausgangssignal einen Schreibzeiger 20 zum Adressieren des FIFO-Speichers 12. Der Schreibzeiger 20 weist dabei eine entsprechende Wortbreite zum Adressieren des FIFO-Speichers 12 auf. Ein erstes Eingangssignal 13 (QWrite)und ein zweites Eingangssignal 14 (QRead) des ersten Zählers stellen die Zählschrittweite ein. Soll ein Byte gespeichert werden, beträgt die Zählschrittweite beispielsweise bei einem 8-Bit organisierten FIFO-Speicher 12 eins, bei einem 2-Bit organisierten FIFO-Speicher 12 dementsprechend vier. Dadurch ist die Wortbreite der in den FIFO-Speicher zu schreibenden Daten einstellbar.

Bei ISDN-2B1Q-Daten bietet sich eine 2-Bit-Organisation des FIFO-Speichers an. In diesem Fall ist es zweckmäßig, daß das zweite Eingangssignal 14 des ersten Zählers 15 die Zählschrittweite auf ein Byte entsprechende vier und das erste Eingangssignal 13 des ersten Zählers 15 die Zählschrittweite auf zwei Bits entsprechend eins einstellt.

Ebenso weist die Vorrichtung einen zweiten Zähler 22 auf, der als zweite Adressiereinrichtung des FIFO-Speichers eingesetzt wird. Das Ausgangssignal des zweiten Zählers 22 dient als Lesezeiger 21. Ebenso wie der erste Zähler 15 ist die Zählschrittweite mittels eines ersten Eingangssignals 24 (QRead) und eines zweiten Eingangssignals 23 (BRead) beispielsweise von einem Mikrokontroller einstellbar. Das erste Eingangssignal 24 stellt dabei die Zählschrittweite auf eins, so daß 2-Bit Daten ausgelesen werden. Das zweite Eingangssignal 23 stellt den Zählschritt zum Lesen eines Bytes auf vier.

Ferner ist eine erste Einrichtung 16, die als Frame-Marker bezeichnet wird, vorgesehen. Der Frame-Marker 16 dient zur Markierung und Signalisierung eines Rahmenanfangs. Dazu signalisiert beispielsweise ein Prozessor mittels eines Frame-Marker-Signals 17 den Anfang eines Rahmens von Daten. Dies bewirkt, daß der Frame-Marker 16 den aktuellen Schreibzeiger 20 speichert. Sobald der Lesezeiger den gleichen Wert wie der abgespeicherte Schreibzeiger aufweist, sendet der Frame-Marker 16 ein Signal an eine zweite Einrichtung 19, die als Marker-Subtrahierer bezeichnet wird. Der Marker-Subtrahierer 19 gibt dann ein erstes Signal 25, ein sogenanntes Frame-Flag, aus. Das Frame-Flag 25 zeigt an, daß der Rahmenanfang gerade aus dem FIFO-Speicher 12 gelesen wird. Der Marker-Subtrahierer 19 dient auch zur Anzeige der Differenz zwischen Schreibzeiger 20 und Lesezeiger 21. Mittels eines Differenz-Signals 18 steuert zum Beispiel ein Prozessor den Marker-Subtrahierer 19 so, daß die Differenz berechnet und signalisiert wird. Dazu wird der Lesezeiger vom Schreibzeiger im Marker-Subtrahierer 19 voneinander subtrahiert und das Ergebnis als zweites Signal 26, auch als Schreib/Lese-Differenz bezeichnet, ausgegeben. Somit kann durch Auswerten des zweiten Signals 26 bzw. der Schreib/Lese-Differenz festgestellt werden, wieviele freie Speicherplätze der FIFO-Speicher 12 noch aufweist.

## Patentansprüche

1. Verfahren zum Schreiben und Lesen eines Pufferspeichers, wobei
- der Pufferspeicher (12) einen Eingang für Schreibdaten (10) und einen Ausgang für Lesedaten (11) aufweist,
- der Ausgang einer ersten Adressiereinrichtung (15) als Schreibzeiger (20) eine zu beschreibende Speicherzelle des Pufferspeichers (12) adressiert,
- der Ausgang einer zweiten Adressiereinrichtung (15) als Lesezeiger (21) eine zu lesende Speicherzelle des Pufferspeichers (12) adressiert, die erste Adressiereinrichtung (15) mittels einer Vielzahl von Eingangssignalen (13, 14), die einer ersten Wortbreite enstpricht derart gesteuert wird, daß die Wortbreite der Schreibdaten (10) wahlweise eingestellt wird
**gekennzeichnet dadurch,**
**dass** die zweite Adressiereinrichtung (22) mittels einer Vielzahl von Eingangssignalen (23, 24), die einer zweiten Wortbreite enstpricht die Wortbreite der Lesedaten (11) wahlweise und unabhängig der erste Wortbreite eingestellt wird.

2. Verfahren nach Anspruch 1, **dadurch gekennzeichnet, daß** der Schreibzeiger (20) und der Lesezeiger (21) einer ersten Einrichtung (19) zugeführt werden, die die Differenz (26) zwischen dem Schreibzeiger (20) und dem Lesezeiger (21) berechnet und signalisiert.

3. Verfahren nach Anspruch 1 oder 2, **dadurch gekennzeichnet, daß** eine zweite Einrichtung (16) vorgesehen ist, die bei entsprechender Signalisierung (17) eine Adresse des Pufferspeichers (12) speichert und die ein Signal ausgibt, wenn der Lesezeiger (21) gleich der abgespeicherten Adresse ist.

4. Vorrichtung zum Schreiben und Lesen eines Pufferspeichers (12) mit
- einer ersten Adressiereinrichtung (15),
- einer zweiten Adressiereinrichtung (15),
wobei
- die erste Adressiereinrichtung (15) eine zu beschreibende Speicherzelle des Pufferspeichers (12) adressiert,
- die zweite Adressiereinrichtung (22) eine zu lesende Speicherzelle des Pufferspeichers (12) adressiert, die erste Adressiereinrichtung (15) mittels einer Vielzahl von Eingangssignalen (13, 14), die einer ersten Wortbreite enstpricht derart gesteuert wird, daß die Wortbreite der Schreibdaten (10) wahlweise eingestellt wird
**gekennzeichnet dadurch,**
**dass** die zweite Adressiereinrichtung (22) mittels einer Vielzahl von Eingangssignalen (23, 24), die einer zweiten Wortbreite enstpricht die Wortbreite der Lesedaten (11) wahlweise und unabhängig der erste Wortbreite eingestellt wird.

5. Vorrichtung nach Anspruch 4, **dadurch gekennzeichnet, daß** die erste Adressiereinrichtung (15) und zweite Adressiereinrichtung (22) als Zähler ausgeführt sind, deren Zählschrittweite durch die Steuereingänge eingestellt wird.

6. Vorrichtung nach Anspruch 4 oder 5, **dadurch gekennzeichnet, daß** eine erste Einrichtung (16) vorgesehen ist, der der Schreibzeiger (20) und der Lesezeiger (21) zugeführt werden und die einen Steuereingang zum Signalisieren eines Rahmenanfangs einer Rahmenstruktur von Daten und einen Ausgang zum Signalisieren der Differenz von Schreibzeiger und Lesezeiger aufweist.

7. Vorrichtung nach Anspruch 4, 5 oder 6, **dadurch gekennzeichnet, daß** eine zweite Einrichtung (19) vorgesehen ist, der der Schreibzeiger (20) zugeführt wird und die einen Steuereingang zum Abspeichern des Schreibzeigers und einen Ausgang zum Signalisieren eines Gleichstandes von Lesezeiger und abgespeicherten Schreibzeiger aufweist.

8. Verfahren zur Anwendung der Verfahrens nach einem der Ansprüche 1 bis 3 in einem Empfänger von ISDN-Daten, wobei in dem Empfänger die ISDN-Daten in ein IOM/PCM-Rahmenformat umgesetzt werden.

## Claims

1. Method for writing to and reading from a buffer memory, in which
- the buffer memory (12) has an input for write data (10) and an output for read data (11),
- the output of a first addressing device (15), as a write pointer (20), addresses a memory cell of the buffer memory (12) that is to be written to,
- the output of a second addressing device (15), as a read pointer (21), addresses a memory cell of the buffer memory (12) that is to be read from,
- the first addressing device (15) is controlled by means of a multiplicity of input singals (13, 14) corresponding to a first word width in such a way that the word width of the write data (10) is selectively set, **characterized in that** the second addressing device (22) [lacuna] by means of a multiplicity of input signals (23, 24) corresponding to a second word width [lacuna] the word width of the read data (11) is set selectively and independently of the first word width.

2. Method according to Claim 1, **characterized in that** the write pointer (20) and the read pointer (31) are fed to a first device (19), which calculates and signals the difference (26) between the write pointer (20) and the read pointer (21).

3. Method according to Claim 1 or 2, **characterized in that** a second device (16) is provided, which, with appropriate signalling (17), stores an address of the buffer memory (12) and outputs a signal when the read pointer (21) is the same as the stored address.

4. Device for writing to and reading from a buffer memory (12) with
- a first addressing device (15),
- a second addressing device (15) [sic],
in which
- the first addressing device (15) addresses a memory cell of the buffer memory (12) that is to be written to,
- the second addressing device (22) addresses a memory cell of the buffer memory (12) that is to be read from, and
- the first addressing device (15) is controlled by means of a multiplicity of input singals (13, 14) corresponding to a first word width in such a way that the word width of the write data (10) is selectively set, **characterized in that** the second addressing device (22) [lacuna] by means of a multiplicity of input signals (23, 24) corresponding to a second word width [lacuna] the word width of the read data (11) is set selectively and independently of the first word width.

5. Device according to Claim 4, **characterized in that** the first addressing device (15) and the second addressing device (22) are designed in the form of counters, the counting increment of which is set by the control inputs.

6. Device according to Claim 4 or 5, **characterized in that** a first device (16) is provided, to which the write pointer (20) and the read pointer (21) are fed and which has a control input for signalling the beginning of a frame of a frame structure of data and an output for signalling the difference between the write pointer and the read pointer.

7. Device according to Claim 4, 5 or 6, **characterized in that** a second device (19) is provided, to which the write pointer (20) is fed and which has a control input for storing the write pointer and an output for signalling an equal standing of the read pointer and the stored write pointer.

8. Method for using the method according to one of Claims 1 to 3 in a receiver of ISDN data, with the ISDN data being converted in the receiver into an IOM/PCM frame format.

## Revendications

1. Procédé pour l'écriture et la lecture d'une mémoire tampon,
- la mémoire tampon (12) comportant une entrée pour les données d'écriture (10) et une sortie pour les données de lecture (11),
- la sortie d'un premier dispositif d'adressage (15) adressant une cellule de la mémoire tampon (12) à écrire en tant que pointeur d'écriture (20),
- la sortie d'un deuxième dispositif d'adressage (15) adressant une cellule de la mémoire tampon (12) à lire en tant que pointeur de lecture (21),
- le premier dispositif d'adressage (15) étant contrôlé à l'aide de nombreux signaux d'entrée (13, 14) correspondant à une première longueur de mot, de telle sorte que la longueur de mot des données d'écriture (10) soit ajustée,
**caractérisé en ce que** le deuxième dispositif d'adressage (22) est ajusté à l'aide de signaux d'entrée (23, 24) correspondant à une deuxième longueur de mot des données de lecture (11) indépendamment de la première longueur de mot.

2. Procédé selon la revendication 1, **caractérisé en ce que** le pointeur d'écriture (20) et le pointeur de lecture (21) sont envoyés à un premier dispositif (19) qui calcule et signalise la différence (26) entre le pointeur d'écriture (20) et le pointeur de lecture (21).

3. Procédé selon la revendication 1 ou 2, **caractérisé en ce qu'**un deuxième dispositif (16) est prévu, qui, lors d'une signalisation correspondante (17), enregistre une adresse de la mémoire tampon (12) et qui génère un signal lorsque le pointeur de lecture (21) est égal à l'adresse enregistrée.

4. Dispositif d'écriture et de lecture d'une mémoire tampon (12), avec
- un premier dispositif d'adressage (15),
- un deuxième dispositif d'adressage (15),
- le premier dispositif d'adressage (15) adressant une cellule de la mémoire tampon (12) à écrire,
- le deuxième dispositif d'adressage (22) adressant une cellule de la mémoire tampon (12) à lire,
- le premier dispositif d'adressage (15) étant contrôlé à l'aide de nombreux signaux d'entrée (13, 14) correspondant à une première longueur de mot, de telle sorte que la longueur de mot des données d'écriture (10) soit ajustée,
**caractérisé en ce que** le deuxième dispositif d'adressage (22) est ajusté à l'aide de signaux d'entrée (23, 24) correspondant à une deuxième longueur de mot des données de lecture (11) indépendamment de la première longueur de mot.

5. Dispositif selon la revendication 4, **caractérisé en ce que** le premier dispositif d'adressage (15) et le deuxième dispositif d'adressage (22) sont configurés comme des compteurs dont la longueur de pas de comptage est ajustée par les entrées de contrôle.

6. Dispositif selon la revendication 4 ou 5, **caractérisé en ce qu'**un premier dispositif (16) est prévu, auquel sont envoyés le pointeur d'écriture (20) et le pointeur de lecture (21) et qui comporte une entrée de signal pour la signalisation du début d'une trame d'une structure de trame de données et une sortie pour la signalisation de la différence entre le pointeur d'écriture et pointeur de lecture.

7. Dispositif selon la revendication 4, 5, ou 6, **caractérisé en ce qu'**un deuxième dispositif (19) est prévu, auquel le pointeur d'écriture (20) est envoyé et qui comporte une entrée de contrôle pour l'enregistrement du pointeur d'écriture et une sortie pour la signalisation d'une égalité des pointeurs de lecture et des pointeurs d'écriture enregistrés.

8. Procédé d'utilisation d'un procédé selon l'une des revendications 1 à 3 dans un récepteur de données ISDN, les données ISDN étant convertis, dans le récepteur, en un format de trame IOM/PCM.
